# EUROPEAN PATENT SPECIFICATION

(11) **EP 3 112 963 B1**
(45) Date of publication and mention of the grant of the patent: **12.06.2019**
(21) Application number: 14888764.9
(22) Date of filing: 11.04.2014
(51) Int. Cl.: G06F 1/32, G06F 3/0488, G06F 3/01, H04W 52/02, H04M 1/725

(54) **WEARABLE DEVICE AND OPERATIONAL MODE SWITCHING CONTROLLING METHOD**
TRAGBARE VORRICHTUNG UND BETRIEBSMODUSUMSCHALTUNGSSTEUERUNGSVERFAHREN
DISPOSITIF VESTIMENTAIRE ET PROCÉDÉ DE COMMANDE DE COMMUTATION DE MODE DE FONCTIONNEMENT

(43) Date of publication of application: 04.01.2017
(73) Proprietor: Huawei Technologies Co. Ltd., Shenzhen, Guangdong 518129 (CN)
(72) Inventor: RONG, Lu, Shenzhen Guangdong 518129 (CN); XIE, Yong, Shenzhen Guangdong 518129 (CN)
(74) Representative: Pfenning, Meinig & Partner mbB
(86) International application number: PCT/CN2014/075213
(87) International publication number: WO 2015/154312

(56) References cited:
- WO-A1-2012/170366
- CN-A- 102 043 385
- CN-A- 102 043 385

## Description

### TECHNICAL FIELD

The present invention relates to the field of electronic technologies, and in particular, to a wearable device and a method for controlling running mode switching.

### BACKGROUND

With development of electronic technologies, an increasing quantity of portable devices come into people's life, for example, portable devices including phones, tablet computers, and the like. However, these portable devices are relatively inconvenient to carry. Therefore, wearable devices emerge, such as smartwatches and smartglasses. Theses wearable devices are more convenient to carry, and can also implement some common functions, such as a sleep detection function and a movement detection function. With gradual popularization of wearable devices, it can be predicted that in the coming years, wearable devices will gradually become an indispensable part of people' life, and make people more convenient.

Because wearable devices are convenient to carry, a person will hold an increasing quantity of wearable devices, which causes operation and management of the wearable devices to be more trivial and complex.
WO2012170366A1 discloses techniques for a wearable device and platform for sensory input, including a sensor coupled to the wearable device, the sensor capable of sensing a sensory input, a processor configured to transform the sensory input to data, the data being processed by an application configured to determine an activity being performed and to generate information associated with the activity being performed while the wearable device is worn, the activity being determined using a motion matcher configured to generate a motion profile associated with the activity, the motion profile configured to be accessed and modified when the activity is performed again, and a communications facility coupled to the wearable device and configured to transfer the data between the wearable device and another device, the data being configured to be presented on a user interface on the wearable device during the performance of the activity.
CN102043385A discloses a user sleeping state-based household appliance control device and a user sleeping state-based household appliance control method. The device comprises a physiologic information monitor and a plurality of household appliance terminal controllers, wherein the physiologic information monitor is connected with the household appliance terminal controllers in a wireless or wired way; a physiologic information sensor for monitoring the sleeping state of a user is connected outside the physiologic information monitor; and the household appliance terminal controllers control corresponding household appliances to work. Various physiologic information parameters of the user during sleeping are acquired and monitored by the physiologic information sensor and information is mined so as to judge whether the user is asleep or awake and whether the user is at a slow eye motion (or slow wave sleep) stage or a quick eye motion (or paradoxical sleep) stage. Therefore, working states of the household appliances are controlled accurately through the household appliance terminal controllers, household appliance intellectualization is realized, the sleeping quality of the household appliance user is enhanced and the aims of saving energy and protecting the environment are fulfilled.

### SUMMARY

Embodiments of the present invention provide a wearable device and a method for controlling running mode switching according to the independent claims., to resolve a problem that operation and management of the wearable device is relatively trivial and complex. Further advantages are achieved by the feature included in the dependent claims.

Specific technical solutions in the embodiments of the present invention are as follows:

A first aspect of the embodiments of the present invention provides a wearable device, including:
a parameter collector, configured to collect a parameter that is used to determine a running mode of an associated electronic device;
a processor, configured to determine, according to the parameter collected by the parameter collector, a running mode to which the electronic device is to switch; and
a transmitter, configured to send a switching instruction to the electronic device according to the running mode determined by the processor, where the switching instruction is used to indicate the running mode to which the electronic device is to switch.

With reference to the first aspect, in a first possible implementation manner, the processor is further configured to:
determine a characteristic parameter value according to the parameter collected by the parameter collector; and
compare the characteristic parameter value with a preset threshold, to determine the running mode to which the electronic device is to switch.

With reference to the first aspect or the first possible implementation manner of the first aspect, in a second possible implementation manner, the parameter collector is further configured to collect a vital sign parameter of a user; and
the processor is further configured to: determine a vital sign parameter value according to the vital sign parameter; and when the vital sign parameter value is less than a preset threshold, determine that the electronic device is to switch to a sleep mode, or when the vital sign parameter value is greater than or equal to the preset threshold, determine that the electronic device is to switch to a normal mode.

With reference to the first aspect or the first possible implementation manner of the first aspect or the second possible implementation manner of the first aspect, in a third possible implementation manner, the parameter collector is further configured to determine a current time; and
the processor is further configured to: determine a current time value according to the current time; and when the current time value is greater than or equal to a preset threshold, determine that the electronic device is to switch to the sleep mode, or when the current time value is less than the preset threshold, determine that the electronic device is to switch to the normal mode.

With reference to the first aspect or the first possible implementation manner of the first aspect or the second possible implementation manner of the first aspect or the third possible implementation manner of the first aspect, in a fourth possible implementation manner, the parameter collector is further configured to detect a parameter of a touch control operation; and
the processor is further configured to: determine a quantity of the touch control operations according to the parameter of the touch control operation; and when the quantity of the touch control operations is greater than or equal to a preset threshold, determine that the electronic device is to switch to the sleep mode, or when the quantity of the touch control operations is less than the preset threshold, determine that the electronic device is to switch to the normal mode.

A second aspect of the embodiments of the present invention provides an electronic device, including:
a receiver, configured to receive a switching instruction sent by an associated wearable device, where the switching instruction is used to indicate a running mode to which the electronic device is to switch; and
a processor, configured to: when it is determined that the switching instruction sent by the receiver meets a preset switching policy, determine the mode in which the electronic device is to run.

With reference to the second aspect, in a first possible implementation manner, the processor is further configured to:
determine a time point at which the switching instruction sent by the receiver is received; and
when it is determined that the time point is after a preset time point, determine that a running mode corresponding to the time point that is after the preset time point is the mode in which the electronic device is to run.

With reference to the second aspect or the first possible implementation manner of the second aspect, in a second possible implementation manner, the electronic device further includes:
a transmitter, configured to send the switching instruction to another electronic device.

A third aspect of the embodiments of the present invention provides a method for controlling running mode switching, including:
collecting a parameter that is used to determine a running mode of an associated electronic device;
determining, according to the parameter, a running mode to which the electronic device is to switch; and
sending a switching instruction to the electronic device according to the determined running mode, where the switching instruction is used to indicate the running mode to which the electronic device is to switch.

With reference to the third aspect, in a first possible implementation manner, the determining, according to the parameter, a running mode to which the electronic device is to switch includes:
determining a characteristic feature value according to the collected parameter; and
comparing the characteristic parameter value with a preset threshold, to determine the running mode to which the electronic device is to switch.

With reference to the third aspect or the first possible implementation manner of the third aspect, in a second possible implementation manner, the collecting a parameter that is used to determine a running mode of an associated electronic device includes:
collecting a vital sign parameter of a user that carries the wearable device; and
the determining, according to the parameter, a running mode to which the electronic device is to switch includes:
   determining a vital sign parameter value according to the vital sign parameter; and when the vital sign parameter value is less than a preset threshold, determining that the electronic device is to switch to a sleep mode, or when the vital sign parameter value is greater than or equal to the preset threshold, determining that the electronic device is to switch to a normal mode.

With reference to the third aspect or the first possible implementation manner of the third aspect or the second possible implementation manner of the third aspect, in a third possible implementation manner, the collecting a parameter that is used to determine a running mode of an associated electronic device includes:
collecting a current time that is used to determine the running mode of the associated electronic device; and
the determining, according to the parameter, a running mode to which the electronic device is to switch includes:
   determining a current time value according to the current time; and when the current time value is greater than or equal to a preset threshold, determining that the electronic device is to switch to the sleep mode, or when the current time value is less than the preset threshold, determining that the electronic device is to switch to a normal running mode.

With reference to the third aspect or the first possible implementation manner of the third aspect or the second possible implementation manner of the third aspect or the third possible implementation manner of the third aspect, in a fourth possible implementation manner, the collecting a parameter that is used to determine a running mode of an associated electronic device includes:
collecting a parameter of a touch control operation, performed by the user that carries the wearable device, on a touch control sensor; and
the determining, according to the parameter, a running mode to which the electronic device is to switch includes:
   determining a quantity of the touch control operations according to the parameter of the touch control operation; and when the quantity of the touch control operations is greater than or equal to a preset threshold, determining that the electronic device is to switch to the sleep mode, or when the quantity of the touch control operations is less than the preset threshold, determining that the electronic device is to switch to a normal running mode.

A fourth aspect of the embodiments of the present invention provides a method for switching a running mode, including:
receiving a switching instruction sent by an associated wearable device, where the switching instruction is used to indicate a running mode to which the electronic device is to switch; and
when it is determined that the switching instruction meets a preset switching policy, determining the mode in which the electronic device is to run.

With reference to the fourth aspect, in a first possible implementation manner, when it is determined that the switching instruction sent by the receiver meets a preset switching policy, determining the mode in which the electronic device is to run includes:
determining a time point at which the switching instruction is received; and
when it is determined that the time point is after a preset time point, determining that a running mode corresponding to the time point that is after the preset time point is the mode in which the electronic device is to run.

With reference to the fourth aspect and the first possible implementation manner of the fourth aspect, in a second possible implementation manner, after the determining the mode in which the electronic device is to run, the method further includes:
sending the switching instruction to another electronic device, so that the another electronic device switches, according to the switching instruction, to the running mode indicated by the switching instruction.

The embodiments of the present invention provide a wearable device, where the wearable device includes: a parameter collector, configured to collect a parameter that is used to determine a running mode of an associated electronic device; a processor, configured to determine, according to the parameter collected by the parameter collector, a running mode to which the electronic device is to switch; and a transmitter, configured to send a switching instruction to the electronic device according to the running mode determined by the processor, where the switching instruction is used to indicate the running mode to which the electronic device is to switch. In this way, the wearable device can automatically control, according to the collected parameter, another electronic device to enter a specified running mode, so that functions of the wearable device are more diversified, and practicability of the wearable device is also improved.

### BRIEF DESCRIPTION OF DRAWINGS

FIG. 1 is a schematic structural diagram of a wearable device according to an embodiment of the present invention;
FIG. 2 is a schematic structural diagram of an electronic device according to an embodiment of the present invention;
FIG. 3 is a flowchart of a method for controlling running mode switching according to an embodiment of the present invention; and
FIG. 4 is a flowchart of a method for switching a running mode according to an embodiment of the present invention.

### DESCRIPTION OF EMBODIMENTS

Embodiments of the present invention provide a wearable device, where the wearable device includes: a parameter collector, configured to collect a parameter that is used to determine a running mode of an associated electronic device; a processor, configured to determine, according to the parameter collected by the parameter collector, a running mode to which the electronic device is to switch; and a transmitter, configured to send a switching instruction to the electronic device according to the running mode determined by the processor, where the switching instruction is used to indicate the running mode to which the electronic device is to switch. In this way, the wearable device can automatically control, according to the collected parameter, another electronic device to enter a specified running mode, so that functions of the wearable device are more diversified, and practicability of the wearable device is also improved.

The following describes the technical solutions of the present invention in detail with reference to the accompanying drawings and specific embodiments.

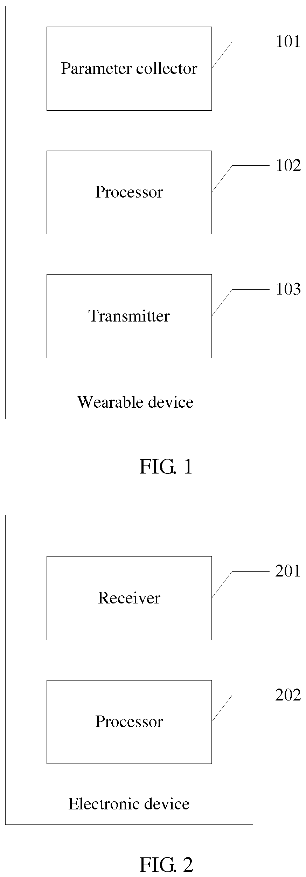

As shown in FIG. 1, FIG. 1 is a schematic diagram of an internal structure of a wearable device, where the wearable device includes:
a parameter collector 101, configured to collect a parameter that is used to determine a running mode of an associated electronic device;
a processor 102, configured to determine, according to the parameter collected by the parameter collector 101, a running mode to which the electronic device is to switch; and
a transmitter 103, configured to send a switching instruction to the electronic device according to the running mode determined by the processor 102, where the switching instruction is used to indicate the running mode to which the electronic device is to switch.

Further, in this embodiment of the present invention, the processor 102 is specifically configured to determine a characteristic parameter value according to the parameter collected by the parameter collector 101. A method for determining the characteristic parameter value may be: directly obtaining a given parameter value or a given type of parameter value from the parameter, and using the given parameter value or the given type of parameter value as the characteristic parameter value; or certainly may be: using a value, obtained by applying a specified calculation rule to the obtained parameter, as the characteristic parameter value.

Then, the obtained characteristic parameter value is compared with a preset threshold to determine, according to a result of comparison between the characteristic parameter value and the present threshold, the running mode to which the electronic device is to switch.

The associated electronic device herein may be an electronic device, such as a tablet computer, or a mobile phone, or a wireless router, that establishes wireless communication with the wearable device.

In this way, the wearable device in this embodiment of the present invention can determine a characteristic parameter value according to a collected parameter, and then generate, according to the characteristic parameter value, a switching instruction that instructs another electronic device associated with the wearable device to switch to a corresponding running mode, so that the electronic device performs running mode switching according to the running mode indicated by the switching instruction. This not only enables functions of the wearable device to be more diversified, but also avoids trivial operations caused when a user manually switches a running mode of the another electronic device.

Specifically, in this embodiment of the present invention, the parameter collector 101 may be a sign sensor, a timer, a touch control sensor, or a location sensor. Different types of sensors are corresponding to different processing manners, which are described according to cases in the following.

### Case 1:

If the parameter collector 101 is a sign sensor, the sign sensor can collect a vital sign parameter of a user that carries the wearable device, and the sign sensor sends the collected vital sign parameter to the processor 102.

When the processor 102 obtains the vital sign parameter collected by the sign sensor, the processor 102 processes the collected vital sign parameter in a preset processing manner, for example, collecting statistics about the vital sign parameter or performing calculation processing on the vital sign parameter, and then obtains a characteristic parameter value for the vital sign parameter. The characteristic parameter value herein may be a pulse value or blood pressure of the user that carries the wearable device. Then, the processor 102 compares the obtained characteristic parameter value with a preset threshold. If the obtained characteristic parameter value is less than the preset threshold, it indicates that the user is in a rest state currently. The processor 102 generates a switching instruction that is used to instruct the electronic device associated with the wearable device to switch to a sleep mode, and sends the generated switching instruction to the transmitter 103. The transmitter 103 sends the switching instruction to the electronic device associated with the wearable device, so that the electronic device switches to the sleep mode according to the switching instruction.

Certainly, if the obtained characteristic parameter value is greater than or equal to a preset threshold, it indicates that the user is not in a rest state currently. The processor 102 generates a switching instruction that instructs the electronic device associated with the wearable device to switch to a normal mode. The electronic device switches from a current running mode of the electronic device to the normal mode indicated by the switching instruction.

Certainly, if the running mode indicated by the switching instruction is the same as the current running mode of the electronic device, the electronic device continues to run in the current running mode.

For example, when the user is in a rest, the sign sensor in the wearable device detects a vital sign parameter of the user, and then the processor 102 determines a current pulse value of the user according to the vital sign parameter. When the pulse value is less than a set threshold, it indicates that the user is in a rest state currently. The processor 102 generates the switching instruction that is used to instruct the electronic device associated with the wearable device to switch to the sleep mode, and sends, by using the transmitter 103, the switching instruction to the electronic device associated with the wearable device, such as a mobile phone and a tablet computer, so that these electronic devices switch to the sleep mode according to the switching instruction. This avoids trivial operations caused when the user manually switches a running mode of each electronic device.

Certainly, after both the wearable device and another device associated with the wearable device switch to the sleep mode, the sign sensor in the wearable device may further continue to detect a vital sign parameter of the user. If it is detected that a characteristic parameter value for the vital sign parameter of the user is greater than or equal to the preset threshold, the processor 102 in the wearable device generates the switching instruction that is used to instruct the electronic device associated with the wearable device to switch to the normal mode, and sends, by using the transmitter 103, the instruction to the electronic device associated with the wearable device, so that the electronic device switches a running mode to the normal mode according to the switching instruction.

### Case 2:

If the parameter collector 101 is a timer, the timer obtains a current time in real time, and then the processor 102 determines a current time value according to the current time. When the current time value is greater than or equal to a preset threshold, it is determined that the electronic device needs to switch to a sleep mode. The processor 102 generates a switching instruction that is used to instruct the electronic device associated with the wearable device to switch to the sleep mode, and finally sends, by using the transmitter 103, the switching instruction to the electronic device associated with the wearable device.

For example, a user sets on the wearable device that a running mode is switched to the sleep mode after 22:00, and the timer of the wearable device detects a current time in real time. If the current time exceeds 22:00, the processor 102 in the wearable device generates the switching instruction that is used to instruct the electronic device associated with the wearable device to switch to the sleep mode, and finally sends, by using the transmitter 103, the generated switching instruction to the electronic device associated with the wearable device. The associated electronic device may be an electronic device, such as a phone, a notebook computer, or a wireless router, that establishes a communication connection with the wearable device. After receiving the switching instruction, these associated electronic devices switch running modes of these associated electronic devices to the sleep mode.

Certainly, if the user further sets a start time on the wearable device, for example, the user sets that running modes of the wearable device and the electronic device associated with the wearable device switch to a normal running mode after 7:00 a.m. In this way, when the timer in the wearable device detects that a current time exceeds 7:00 a.m., the processor 102 generates a switching instruction that is used to instruct the electronic device associated with the wearable device to switch to a normal mode, and finally sends, by using the transmitter 103, the generated switching instruction to the electronic device associated with the wearable device, so that the electronic device associated with the wearable device switches to the normal mode according to the switching instruction.

### Case 3:

If the parameter collector 101 is a touch control sensor, the touch control sensor may detect a touch control operation performed on the touch control sensor, and collect a parameter of a touch control operation performed by a user on the touch control sensor.

The processor 102 can determine, according to the parameter of the touch control operation, a quantity of the touch control operations performed by the user, and determine whether the quantity of the touch control operations is greater than or equal to a preset threshold. If the quantity of the touch control operations performed by the user is greater than or equal to the preset threshold, the processor 102 determines that the electronic device associated with the wearable device is to switch to a sleep mode, and generates a switching instruction that is used to instruct the electronic device associated with the wearable device to switch to the sleep mode. If the quantity of the touch control operations performed by the user is less than the preset threshold, the processor 102 generates a switching instruction that is used to instruct the electronic device associated with the wearable device to switch to a normal mode, and sends, by using the transmitter 103, the switching instruction to the electronic device associated with the wearable device, so that the associated electronic device switches to the sleep mode or the normal mode.

It should be noted that, a correspondence between a quantity of touch controls and a running mode may be further set on the wearable device. That is, different quantities of touch controls are corresponding to different running modes. The processor 102 determines, according to a quantity of touch controls that are obtained by means of detection, a corresponding running mode. For example, one touch control is corresponding to a sleep mode, two touch controls are corresponding to a standby mode, and three touch controls are corresponding to a normal mode. After determining the corresponding running mode, the processor 102 generates a corresponding switching instruction, and finally sends, by using the transmitter 103 in the wearable device, the generated switching instruction to the electronic device associated with the wearable device, so that the associated electronic device switches to the running mode indicated by the switching instruction. In this way, it can be avoided that the user manually switches a running mode of the electronic device, which not only reduces trivial operations for the user, but also improves user experience of the wearable device.

### Case 4:

If the parameter collector 101 is a location sensor, the location sensor can determine information about a location at which a user is located, and then the location sensor sends the determined information about the location to the processor 102. Then, the processor 102 extracts location coordinates from the information about the location, and the processor 102 determines whether the extracted location coordinates fall within a specified interval range. When the location coordinates fall within the specified interval range, the processor 102 generates a switching instruction that is used to instruct the electronic device associated with the wearable device to switch to a conference mode. When the location coordinates goes beyond the specified interval range, the processor 102 generates a switching instruction that is used to instruct the electronic device associated with the wearable device to switch to a normal mode.

For example, a location coordinate interval range is stored on the wearable device. The location coordinate interval range is corresponding to a conference mode. When the user that carries the wearable device enters a given area, the location sensor in the wearable device collects information about a current location, the processor 102 extracts location coordinates from the information about the location, and then the processor 102 determines whether the extracted location coordinates fall within the stored location coordinate interval range. If the extracted location coordinates fall within the location coordinate interval range, the processor 102 generates the switching instruction that instructs the electronic device associated with the wearable device to switch to the conference mode, and finally sends, by using the transmitter 103 in the wearable device, the switching instruction to another electronic device associated with the wearable device, so that the another electronic device switches, according to the switching instruction, a running mode of the another electronic device to the conference mode. If the extracted location coordinates fall out of the location coordinate interval range, the processor 102 generates the switching instruction that instructs the electronic device associated with the wearable device to switch to the normal mode, and finally sends, by using the transmitter 103 in the wearable device, the switching instruction to the electronic device associated with the wearable device.

It should be noted that, in this embodiment of the present invention, after the wearable device generates a switching instruction, the wearable device may switch to a running mode indicated by the switching instruction; or certainly, the wearable device may not perform running mode switching.

In addition, in this embodiment of the present invention, the wearable device may use the switching instruction to carry a running mode switching instruction; in addition, the wearable device may further generate, according to a parameter obtained by means of detection, an instruction for adjusting another running parameter of the electronic device associated with the wearable device, and use the switching instruction to carry the instruction for adjusting another running parameter. For example, an instruction for adjusting display luminance of the electronic device associated with the wearable device or an instruction for tuning volume of the electronic device is generated according to a current time, and then the generated instruction is carried in the switching instruction. In this way, after receiving the switching instruction, the electronic device associated with the wearable device further adjusts a running parameter of the electronic device when performing running mode switching.

Herein, it should be noted that the foregoing four cases are only four embodiments included in the technical solutions of the present invention.

### Embodiment 2

This embodiment of the present invention further provides an electronic device. As shown in FIG. 2, FIG. 2 is a schematic structural diagram of the electronic device in this embodiment of the present invention, where the electronic device includes:
a receiver 201, configured to receive a switching instruction sent by an associated wearable device.
a processor 202, configured to: when the switching instruction sent by the receiver 201 meets a preset switching policy, determine a mode in which the electronic device is to run.

Specifically, the electronic device in Embodiment 2 establishes a wireless communication connection with the wearable device in Embodiment 1, for example, by using a WI-FI connection or a Bluetooth connection. After the wearable device sends, to the electronic device, a switching instruction that is used to instruct the electronic device to perform mode switching, the receiver 201 in the electronic device obtains the switching instruction, and then the processor 202 determines, according to the switching instruction, whether the switching instruction meets the preset switching policy. If the preset switching policy is met, the mode in which the electronic device is to run is determined, and a running mode of the electronic device is switched to the determined mode in which the electronic device is to run.

If it is determined that the switching instruction does not meet the preset switching policy, it is determined that the electronic device switches to a normal running mode.

Specifically, if the processor determines a time point at which the switching instruction sent by the receiver 201 is received, and determines that the switching instruction is received after a preset time point, the processor 202 determines that a running mode corresponding to a time point after the preset time point is the mode in which the electronic device is to run. For example, if the switching instruction is received at a time point after 10:00 p.m., it is determined that a sleep mode is a running mode to which the electronic device is to switch.

Certainly, the mode in which the electronic device is to run is determined according to the time point at which the switching instruction is received. Alternatively, when it is determined that the switching instruction is received, the electronic device may further determine whether the electronic device communicates with another electronic device; and if the electronic device communicates with the another electronic device, the electronic device determines that a current running mode is the mode in which the electronic device is to run. That is, the electronic device does not switch the running mode.

If the electronic device is not connected to the another electronic device, the electronic device performs switching according to the running mode indicated by the switching instruction.

In the foregoing embodiment, the running mode of the electronic device may be automatically controlled by using the wearable device carried by the user, thereby avoiding trivial operations caused when the user manually switches the running mode of the electronic device.

Further, in this embodiment of the present invention, after the receiver 201 in the electronic device obtains the switching instruction that instructs the electronic device to perform running mode switching and is sent by the wearable device associated with the electronic device, the receiver 201 in the electronic device further sends the switching instruction to another electronic device with which the electronic device establishes a communication connection, so that the another electronic device performs switching according to the running mode indicated by the switching instruction.

For example, the wearable device is connected to a mobile phone of the user by using WI-FI, the mobile phone of the user is connected to a wireless router by using WI-FI, and the mobile phone is further connected to a notebook computer by using WI-FI. In this case, if the wearable device sends a switching instruction to the mobile phone of the user, the mobile phone of the user switches to a running mode indicated by the switching instruction. In addition, the mobile phone further sends the switching instruction to the wireless router and the notebook computer on a same WI-FI network. In this way, the wireless router and the notebook computer switch to the running mode indicated by the switching instruction.

### Embodiment 3

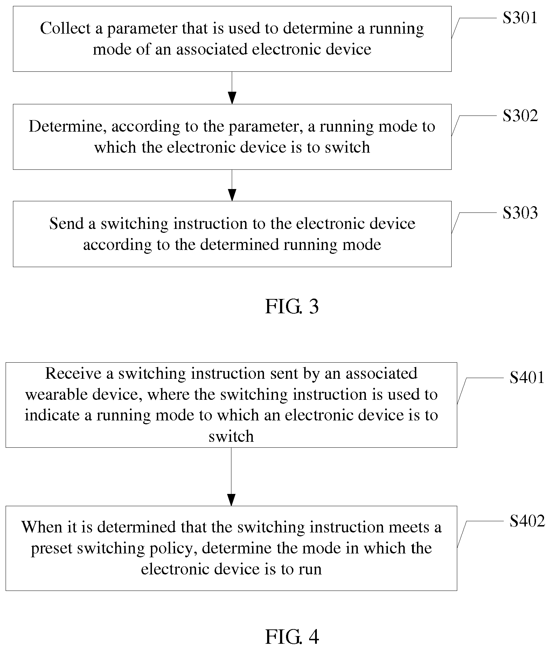

This embodiment of the present invention further provides a method for controlling running mode switching, where the method is executed by a wearable device. As shown in FIG. 3, FIG. 3 is a flowchart of the method, where the method includes:
S301. Collect a parameter that is used to determine a running mode of an associated electronic device.
S302. Determine, according to the parameter, a running mode to which the electronic device is to switch.
S303. Send a switching instruction to the electronic device according to the determined running mode.

Specifically, if the parameter collected in S301 is a vital sign parameter of a user, a characteristic parameter value is determined according to the vital sign parameter. The characteristic parameter value herein may be a pulse value of the user or a blood pressure value of the user. The characteristic parameter value is compared with a preset threshold. When the characteristic parameter value is less than the preset threshold, it is determined that the electronic device is to switch to a sleep mode. When the characteristic parameter value is greater than or equal to the preset threshold, it is determined that the electronic device is to switch to a normal mode.

In addition, if the parameter collected in S301 is a current time, a time value is determined according to the current time. The time value is compared with a preset threshold. When it is determined that the time value is greater than or equal to the preset threshold, it is determined that the electronic device is to switch to a sleep mode. When it is determined that the time value is less than the preset threshold, it is determined that the electronic device is to switch to a normal mode. That is, as long as a time that is set by the user arrives, the wearable device generates a switching instruction that is used to instruct the electronic device associated with the wearable device to switch to the sleep mode. If the obtained time value is less than or equal to the preset threshold, the wearable device generates a switching instruction that is used to instruct the electronic device associated with the wearable device to switch to the normal mode.

In addition, if the parameter collected in S301 is a parameter of a touch control operation, a quantity of the touch control operations is determined according to the parameter of the touch control operation. The obtained quantity of the touch control operations is compared with a preset threshold. When the obtained quantity of the touch control operations is greater than or equal to the preset threshold, it is determined that the associated electronic device is to switch to a sleep mode. Otherwise, it is determined that the electronic device is to switch to a normal mode.

Certainly, in addition to the parameters described in the foregoing examples, the wearable device may further detect another parameter by setting another condition. For example, the wearable device may determine, according to surrounding ambient luminance, whether to perform running mode switching, or determine, according to noises in an environment, whether to perform running mode switching. A specific implementation manner is not limited in this embodiment of the present invention.

After the running mode to which the electronic device is to switch is determined in S302, the switching instruction is sent, by performing S303, to the electronic device with which the wearable device establishes a communication connection, so that the electronic device switches, according to the switching instruction, to the running mode indicated by the switching instruction.

In this way, in this embodiment of the present invention, after collecting a particular parameter, a wearable device can determine, according to the parameter, a running mode to which an electronic device associated with the wearable device is to switch, generate a switching instruction that instructs the electronic device to perform running mode switching, and send the switching instruction to the associated electronic device, so that the associated electronic device automatically completes the running mode switching according to the switching instruction. This avoids that a user manually performs running mode switching, reduces trivial operations for the user, and improves user experience of the wearable device.

### Embodiment 4

This embodiment of the present invention further provides a method for switching a running mode, where the method is executed by an electronic device. As shown in FIG. 4, FIG. 4 is a flowchart of the method for switching a running mode, where the method includes:
S401. Receive a switching instruction sent by an associated wearable device, where the switching instruction is used to indicate a running mode to which the electronic device is to switch.
S402. When it is determined that the switching instruction meets a preset switching policy, determine the mode in which the electronic device is to run.

Specifically, in this embodiment of the present invention, the electronic device establishes a communication connection with the wearable device in Embodiment 1. When the wearable device sends, to the electronic device, the switching instruction that instructs the electronic device to perform running mode switching, the electronic device obtains the switching instruction by using a receiver of the electronic device.

When the electronic device receives the switching instruction sent by the wearable device, the electronic device determines a time point at which the switching instruction is received. When the electronic device determines that the time point at which the switching instruction is received is after a preset time point, the electronic device determines that a running mode corresponding to the time point that is after the preset time point is the mode in which the electronic device is to run. For example, when a user sets the preset time point to 10:00, and after electronic device receives, after 10:00, the switching instruction sent by the wearable device, the electronic device determines a sleep mode as the mode in which the electronic device is to run. Certainly, a correspondence between a time point and a running mode may be defined by the user.

Further, the electronic device determines a running mode to which the electronic device needs to switch, then the electronic device further determines whether a current running mode of the electronic device is the running mode indicated by the switching instruction. If the current running mode of the electronic device is the running mode indicated by the switching instruction, the electronic device does not perform running mode switching. If the current running mode of the electronic device is not the running mode indicated by the switching instruction, the electronic device is to switch to the running mode indicated by the switching instruction.

Certainly, after the electronic device obtains the switching instruction, the electronic device sends the switching instruction to another electronic device with which the electronic device establishes a communication connection. The communication connection herein may be a WI-FI connection or a Bluetooth connection.

After the another electronic device receives the switching instruction, the another electronic device switches a running mode of the another electronic device to the running mode indicated by the switching instruction.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the scope of the present invention. The present invention is intended to cover these modifications and variations provided that they fall within the scope of protection defined by the following claims.

## Claims

1. A wearable device, comprising:
a parameter collector (101), configured to collect a parameter that is used to determine a running mode of an associated electronic device;
a processor (102), configured to determine, according to the parameter collected by the parameter collector, a running mode to which the electronic device is to be switched; and
a transmitter (103), configured to send a switching instruction to the electronic device according to the running mode determined by the processor, wherein the switching instruction is used to indicate the running mode to which the electronic device is to be switched;
wherein the parameter collector (101) is a touch control sensor and is further configured to detect a parameter of a touch control operation; and
the processor (102) is further configured to: determine a quantity of the touch control operations according to the parameter of the touch control operation; and when the quantity of the touch control operations is greater than or equal to a preset threshold, determine that the electronic device is to be switched to a sleep mode, or when the quantity of the touch control operations is less than the preset threshold, determine that the electronic device is to be switched to a normal mode.

2. The device according to claim 1, wherein the processor (102) is further configured to:
determine a characteristic parameter value according to the parameter collected by the parameter collector; and
compare the characteristic parameter value with a preset threshold, to determine the running mode to which the electronic device is to be switched.

3. The device according to claim 1 or 2, wherein the parameter collector (101) is further configured to collect a vital sign parameter of a user that carries the wearable device; and
the processor (102) is further configured to: determine a vital sign parameter value according to the vital sign parameter; and when the vital sign parameter value is less than a preset threshold, determine that the electronic device is to be switched to the sleep mode, or when the vital sign parameter value is greater than or equal to the preset threshold, determine that the electronic device is to be switched to the normal mode.

4. The device according to any one of claims 1 to 3, the parameter collector (101) is further configured to determine a current time; and
the processor (102) is further configured to: determine a current time value according to the current time; and when the current time value is greater than or equal to a preset threshold, determine that the electronic device is to be switched to the sleep mode, or when the current time value is less than the preset threshold, determine that the electronic device is to be switched to the normal mode.

5. A method for controlling running mode switching, comprising:
collecting (S301), by a wearable device, a parameter that is used to determine a running mode of an associated electronic device;
determining (S302), by the wearable device according to the parameter, a running mode to which the electronic device is to be switched; and
sending (S303), by the wearable device, a switching instruction to the electronic device according to the determined running mode, wherein the switching instruction is used to indicate the running mode to which the electronic device is to be switched;
wherein the collecting (S301), by the wearable device, a parameter that is used to determine a running mode of an associated electronic device comprises:
collecting a parameter of a touch control operation, performed by the user that carries the wearable device, on a touch control sensor; and
the determining (S302), by the wearable device according to the parameter, a running mode to which the electronic device is to be switched comprises:
determining a quantity of the touch control operations according to the parameter of the touch control operation; and when the quantity of the touch control operations is greater than or equal to a preset threshold, determining that the electronic device is to be switched to a sleep mode, or when the quantity of the touch control operations is less than the preset threshold, determining that the electronic device is to be switched to a normal mode.

6. The method according to claim 5, wherein the determining (S302), by the wearable device according to the parameter, a running mode to which the electronic device is to be switched comprises:
determining a characteristic parameter value according to the collected parameter; and
comparing the characteristic parameter value with a preset threshold, to determine the running mode to which the electronic device is to be switched.

7. The method according to claim 5 or 6, wherein the collecting (S301), by the wearable device, a parameter that is used to determine a running mode of an associated electronic device comprises:
collecting a vital sign parameter of a user that carries a wearable device; and
the determining (S302), according to the parameter, a running mode to which the electronic device is to be switched comprises:
determining a vital sign parameter value according to the vital sign parameter; and when the vital sign parameter value is less than a preset threshold, determining that the electronic device is to be switched to the sleep mode, or when the vital sign parameter value is greater than or equal to the preset threshold, determining that the electronic device is to be switched to the normal mode.

8. The method according to any one of claims 5 to 7, wherein the collecting (S301), by the wearable device, a parameter that is used to determine a running mode of an associated electronic device comprises:
collecting a current time that is used to determine the running mode of the associated electronic device; and
the determining (S302), according to the parameter, a running mode to which the electronic device is to be switched comprises:
determining a current time value according to the current time; and when the current time value is greater than or equal to a preset threshold, determining that the electronic device is to be switched to the sleep mode, or when the current time value is less than the preset threshold, determining that the electronic device is to be switched to the normal mode.

## Patentansprüche

1. Wearable-Vorrichtung, umfassend:
einen Parameter-Sammler (101), der dazu eingerichtet ist, einen Parameter zu sammeln, der benutzt wird, um einen Ausführungsmodus einer zugeordneten elektronischen Vorrichtung zu bestimmen;
einen Prozessor (102), der dazu eingerichtet ist, gemäß dem von dem Parameter-Sammler gesammelten Parameter einen Ausführungsmodus zu bestimmen, in welchen die elektronische Vorrichtung umgeschaltet werden soll; und
einen Sender (103), der dazu eingerichtet ist, eine Umschaltanweisung gemäß dem von dem Prozessor bestimmten Ausführungsmodus an die elektronische Vorrichtung zu senden, wobei die Umschaltanweisung benutzt wird, um den Ausführungsmodus anzugeben, in welchen die elektronische Vorrichtung umgeschaltet werden soll;
wobei der Parametersammler (101) ein Berührungs-Steuersensor ist und ferner dazu eingerichtet ist, einen Parameter eines Berührungs-Steuervorgangs zu erkennen; und
der Prozessor (102) ferner dazu eingerichtet ist: eine Quantität der Berührungs-Steuervorgänge gemäß dem Parameter des Berührungs-Steuervorgangs zu bestimmen; und wenn die Quantität der Berührungs-Steuervorgänge größer als oder gleich groß wie eine vorbestimmte Schwelle ist, zu bestimmen, dass die elektronische Vorrichtung in einen Schlafmodus umgeschaltet werden soll, oder wenn die Quantität der Berührungs-Steuervorgänge kleiner als die vorbestimmte Schwelle ist, zu bestimmen, dass die elektronische Vorrichtung in einen normalen Modus umgeschaltet werden soll.

2. Vorrichtung nach Anspruch 1, wobei der Prozessor (102) ferner dazu eingerichtet ist:
einen kennzeichnenden Parameterwert gemäß dem von dem Parameter-Sammler gesammelten Parameter zu bestimmen; und
den kennzeichnenden Parameterwert mit einer vorbestimmten Schwelle zu vergleichen, um den Ausführungsmodus zu bestimmen, in welchen die elektronische Vorrichtung umgeschaltet werden soll.

3. Vorrichtung nach Anspruch 1 oder 2, wobei der Parameter-Sammler (101) ferner dazu eingerichtet ist, einen Vitalzeichen-Parameter eines Benutzers zu sammeln, welcher die Wearable-Vorrichtung trägt; und
der Prozessor (102) ferner dazu eingerichtet ist: einen Vitalzeichen-Parameterwert gemäß dem Vitalzeichen-Parameter zu bestimmen; und wenn der Vitalzeichen-Parameterwert kleiner als eine vorbestimmte Schwelle ist, zu bestimmen, dass die elektronische Vorrichtung in den Schlafmodus umgeschaltet werden soll, oder wenn der Vitalzeichen-Parameterwert größer als oder gleich groß wie die vorbestimmte Schwelle ist, zu bestimmen, dass die elektronische Vorrichtung in den normalen Modus umgeschaltet werden soll.

4. Vorrichtung nach einem der Ansprüche 1 bis 3, wobei der Parametersammler (101) ferner dazu eingerichtet ist, eine aktuelle Zeit zu bestimmen; und
der Prozessor (102) ferner dazu eingerichtet ist: einen aktuellen Zeitwert gemäß der aktuellen Zeit zu bestimmen; und wenn der aktuelle Zeitwert größer als oder gleich groß wie eine vorbestimmte Schwelle ist, zu bestimmen, dass die elektronische Vorrichtung in den Schlafmodus umgeschaltet werden soll, oder wenn der aktuelle Zeitwert kleiner als die vorbestimmte Schwelle ist, zu bestimmen, dass die elektronische Vorrichtung in den normalen Modus umgeschaltet werden soll.

5. Verfahren zum Steuern eines Ausführungsmodus-Umschaltens, umfassend:
Sammeln (S301), durch eine Wearable-Vorrichtung, eines Parameters, der benutzt wird, um einen Ausführungsmodus einer zugeordneten elektronischen Vorrichtung zu bestimmen;
Bestimmen (S302), durch die Wearable-Vorrichtung, gemäß dem Parameter, eines Ausführungsmodus, in welchen die elektronische Vorrichtung umgeschaltet werden soll; und
Senden (S303), durch die Wearable-Vorrichtung, einer Umschaltanweisung gemäß dem bestimmten Ausführungsmodus an die elektronische Vorrichtung, wobei die Umschaltanweisung benutzt wird, um den Ausführungsmodus anzugeben, in welchen die elektronische Vorrichtung umgeschaltet werden soll;
wobei das Sammeln (S301), durch die Wearable-Vorrichtung, eines Parameters, der benutzt wird, um einen Ausführungsmodus einer zugeordneten elektronischen Vorrichtung zu bestimmen, umfasst:
Sammeln eines Parameters eines Berührungs-Steuervorgangs an einem Berührungs-Steuersensor, wobei der Berührungs-Steuervorgang von dem Benutzer vollführt wird, der die Wearable-Vorrichtung trägt; und
das Bestimmen (S302), durch die Wearable-Vorrichtung, gemäß Ausführungsmodus, in welchen die elktronische Vorrichtung umgeschaltet werden soll, umfasst:
Bestimmen einer Quantität der Berührungs-Steuervorgänge gemäß dem Parameter des Berührungs-Steuervorgangs; und wenn die Quantität der Berührungs-Steuervorgänge größer als oder gleich groß wie eine vorbestimmte Schwelle ist, Bestimmen, dass die elektronische Vorrichtung in einen Schlafmodus umgeschaltet werden soll, oder wenn die Quantität der Berührungs-Steuervorgänge kleiner als die vorbestimmte Schwelle ist, zu bestimmen, dass die elektronische Vorrichtung in einen normalen Modus umgeschaltet werden soll.

6. Verfahren nach Anspruch 5, wobei das Bestimmen (S302), durch die Wearable-Vorrichtung, gemäß dem Parameter, eines Ausführungsmodus, in welchen die elektronische Vorrichtung umgeschaltet werden soll, umfasst:
Bestimmen eines kennzeichnenden Parameterwerts gemäß dem gesammelten Parameter; und
Vergleichen des kennzeichnenden Parameterwerts mit einer vorbestimmten Schwelle, um den Ausführungsmodus zu bestimmen, in welchen die elektronische Vorrichtung umgeschaltet werden soll.

7. Vorrichtung nach Anspruch 5 oder 6, wobei das Sammeln (S301), durch die Wearable-Vorrichtung, eines Parameters, der benutzt wird, um einen Ausführungsmodus einer zugeordneten elektronischen Vorrichtung zu bestimmen, umfasst:
Sammeln eines Vitalzeichen-Parameters eines Benutzers zu sammeln, welcher die Wearable-Vorrichtung trägt; und
das Bestimmen (302), gemäß dem Parameter, eines Ausführungsmodus, in welchen die elektronische Vorrichtung umgeschaltet werden soll, umfasst:
Bestimmen eines Vitalzeichen-Parameterwerts gemäß dem Vitalzeichen-Parameter; und wenn der Vitalzeichen-Parameterwert kleiner als eine vorbestimmte Schwelle ist, Bestimmen, dass die elektronische Vorrichtung in den Schlafmodus umgeschaltet werden soll, oder wenn der Vitalzeichen-Parameterwert größer als oder gleich groß wie die vorbestimmte Schwelle ist, Bestimmen, dass die elektronische Vorrichtung in den normalen Modus umgeschaltet werden soll.

8. Verfahren nach einem der Ansprüche 5 bis 7, wobei das Sammeln (S301), durch die Wearable-Vorrichtung, eines Parameters, der benutzt wird, um einen Ausführungsmodus einer zugeordneten elektronischen Vorrichtung zu bestimmen, umfasst:
Sammeln einer aktuellen Zeit, die benutzt wird, um den Ausführungsmodus der zugeordneten elektronischen Vorrichtung zu bestimmen; und
das Bestimmen (S302), gemäß dem Parameter, eines Ausführungsmodus, in welchen die elektronische Vorrichtung umgeschaltet werden soll, umfasst:
Bestimmen eines aktuellen Zeitwerts gemäß der aktuellen Zeit; und wenn der aktuelle Zeitwert größer als oder gleich groß wie eine vorbestimmte Schwelle ist, Bestimmen, dass die elektronische Vorrichtung in den Schlafmodus umgeschaltet werden soll, oder wenn der aktuelle Zeitwert kleiner als die vorbestimmte Schwelle ist, Bestimmen, dass die elektronische Vorrichtung in den normalen Modus umgeschaltet werden soll.

## Revendications

1. Dispositif portable, comprenant :
un collecteur de paramètre (101), configuré pour collecter un paramètre qui est utilisé pour déterminer un mode de fonctionnement d'un dispositif électronique associé ;
un processeur (102), configuré pour déterminer, selon le paramètre collecté par le collecteur de paramètre, un mode de fonctionnement auquel le dispositif électronique doit être commuté ; et
un transmetteur (103), configuré pour envoyer une instruction de commutation au dispositif électronique selon le mode de fonctionnement déterminé par le processeur,
dans lequel l'instruction de commutation est utilisée pour indiquer le mode de fonctionnement auquel le dispositif électronique doit être commuté,
dans lequel le collecteur de paramètre (101) est un capteur de commande tactile et est en outre configuré pour détecter un paramètre d'une opération de commande tactile ; et
le processeur (102) est en outre configuré pour: déterminer une quantité des opérations de commande tactile selon le paramètre de l'opération de commande tactile ; et, lorsque la quantité des opérations de commande tactile est supérieure ou égale à un seuil prédéfini, déterminer que le dispositif électronique doit être commuté à un mode veille, ou, lorsque la quantité des opérations de commande tactile est inférieure au seuil prédéfini, déterminer que le dispositif électronique doit être commuté à un mode normal.

2. Dispositif selon la revendication 1, dans lequel le processeur (102) est en outre configuré pour :
déterminer une valeur de paramètre caractéristique selon le paramètre collecté par le collecteur de paramètre ; et
comparer la valeur de paramètre caractéristique à un seuil prédéfini, pour déterminer le mode de fonctionnement auquel le dispositif électronique doit être commuté.

3. Dispositif selon la revendication 1 ou 2, dans lequel le collecteur de paramètre (101) est en outre configuré pour collecter un paramètre de signe vital d'un utilisateur qui porte le dispositif portable ; et
le processeur (102) est en outre configuré pour : déterminer une valeur de paramètre de signe vital selon le paramètre de signe vital ; et, lorsque la valeur de paramètre de signe vital est inférieure à un seuil prédéfini, déterminer que le dispositif électronique doit être commuté au mode veille, ou, lorsque la valeur de paramètre de signe vital est supérieure ou égale au seuil prédéfini, déterminer que le dispositif électronique doit être commuté au mode normal.

4. Dispositif selon l'une quelconque des revendications 1 à 3, le collecteur de paramètre (101) est en outre configuré pour déterminer une heure actuelle ; et
le processeur (102) est en outre configuré pour: déterminer une valeur d'heure actuelle selon l'heure actuelle ; et, lorsque la valeur d'heure actuelle est supérieure ou égale à un seuil prédéfini, déterminer que le dispositif électronique doit être commuté au mode veille, ou, lorsque la valeur d'heure actuelle est inférieure au seuil prédéfini, déterminer que le dispositif électronique doit être commuté au mode normal.

5. Procédé pour commander la commutation de mode de fonctionnement, comprenant :
la collecte (S301), par un dispositif portable, d'un paramètre qui est utilisé pour déterminer un mode de fonctionnement d'un dispositif électronique associé ;
la détermination (S302), par le dispositif portable, selon le paramètre, d'un mode de fonctionnement auquel le dispositif électronique doit être commuté ; et
l'envoi (S303), par le dispositif portable, d'une instruction de commutation au dispositif électronique selon le mode de fonctionnement déterminé, dans lequel l'instruction de commutation est utilisée pour indiquer le mode de fonctionnement auquel le dispositif électronique doit être commuté ;
dans lequel la collecte (S301), par le dispositif portable, d'un paramètre qui est utilisé pour déterminer un mode de fonctionnement d'un dispositif électronique associé comprend :
la collecte d'un paramètre d'une opération de commande tactile, réalisée par l'utilisateur qui porte le dispositif portable, sur un capteur de commande tactile ; et
la détermination (S302), par le dispositif portable, selon le paramètre, d'un mode de fonctionnement auquel le dispositif électronique doit être commuté comprend :
la détermination d'une quantité des opérations de commande tactile selon le paramètre de l'opération de commande tactile ; et, lorsque la quantité des opérations de commande tactile est supérieure ou égale à un seuil prédéfini, la détermination que le dispositif électronique doit être commuté à un mode veille, ou, lorsque la quantité des opérations de commande tactile est inférieure au seuil prédéfini, la détermination que le dispositif électronique doit être commuté à un mode normal.

6. Procédé selon la revendication 5, dans lequel la détermination (S302), par le dispositif portable, selon le paramètre, d'un mode de fonctionnement auquel le dispositif électronique doit être commuté comprend :
la détermination d'une valeur de paramètre caractéristique selon le paramètre collecté ; et
la comparaison de la valeur de paramètre caractéristique à un seuil prédéfini, pour déterminer le mode de fonctionnement auquel le dispositif électronique doit être commuté.

7. Procédé selon la revendication 5 ou 6, dans lequel la collecte (S301), par le dispositif portable, d'un paramètre qui est utilisé pour déterminer un mode de fonctionnement d'un dispositif électronique associé comprend :
la collecte d'un paramètre de signe vital d'un utilisateur qui porte un dispositif portable ; et
la détermination (S302), selon le paramètre, d'un mode de fonctionnement auquel le dispositif électronique doit être commuté comprend :
la détermination d'une valeur de paramètre de signe vital selon le paramètre de signe vital ; et, lorsque la valeur de paramètre de signe vital est inférieure à un seuil prédéfini, la détermination que le dispositif électronique doit être commuté au mode veille, ou, lorsque la valeur de paramètre de signe vital est supérieure ou égale au seuil prédéfini, la détermination que le dispositif électronique doit être commuté au mode normal.

8. Procédé selon l'une quelconque des revendications 5 à 7, dans lequel la collecte (S301), par le dispositif portable, d'un paramètre qui est utilisé pour déterminer un mode de fonctionnement d'un dispositif électronique associé comprend :
la collecte d'une heure actuelle qui est utilisée pour déterminer le mode de fonctionnement du dispositif électronique associé ; et
la détermination (S302), selon le paramètre, d'un mode de fonctionnement auquel le dispositif électronique doit être commuté comprend :
la détermination d'une valeur d'heure actuelle selon l'heure actuelle ; et, lorsque la valeur d'heure actuelle est supérieure ou égale à un seuil prédéfini, la détermination que le dispositif électronique doit être commuté au mode veille, ou, lorsque la valeur d'heure actuelle est inférieure au seuil prédéfini, la détermination que le dispositif électronique doit être commuté au mode normal.
